# FASCICULE DE BREVET EUROPEEN

(11) **EP 0 524 051 B1**
(45) Date de publication et mention de la délivrance du brevet: **25.10.1995**
(21) Numéro de dépôt: 92401911.0
(22) Date de dépôt: 03.07.1992
(51) Int. Cl.: B60J 7/043

(54) **Un toit ouvrant entrebâillant et coulissant à biellettes**
Mit Hebeln versehenes kippbares Schiebedach
Sliding tilting roof with levers

(30) Priorité: 19.07.1991 FR 9109151
(43) Date de publication de la demande: 20.01.1993
(73) Titulaire: WEBASTO HEULIEZ : Société à Responsabilité Limitée, F-85700 Les Châtelliers -Châteaumur (FR)
(72) Inventeur: Cheron, Christian, F-49000 Angers (FR); Thierry, Pierre, F-49300 Cholet (FR); De Gaillard, François, F-85390 Mouilleron en Pareds (FR)
(74) Mandataire: Keib, Gérard

(56) Documents cités:
- EP-A- 0 187 398
- FR-A- 2 525 159
- FR-A- 2 601 303
- GB-A- 2 133 750

## Description

L'invention se rapporte aux toits ouvrants, notamment pour véhicule automobile. Il est courant d'équiper les véhicules automobiles ayant un pavillon, d'un dispositif d'ouverture et/ou de fermeture de toit, dit toit-ouvrant, comprenant un panneau mobile articulé dans une ouverture aménagée dans la surface fixe du pavillon. Parmi les dispositifs d'ouverture et/ou de fermeture de toit, on connaît ceux dont le panneau peut être entrebâillé et/ou coulissé au-dessus de la surface du pavillon pour ne pas diminuer le volume habitacle du véhicule.

Les dispositifs d'ouverture et/ou de fermeture de toit connus à panneau entrebâillant et coulissant au-dessus de la surface du pavillon, comprennent généralement une paire de rails de guidage longeant deux côtés latéraux opposés de l'ouverture, au moins une paire de chariots placés de chaque côté latéral du panneau, les chariots étant mobiles en translation longitudinale dans les rails de guidage et actionnés en translation par une paire de câbles, une paire de coulisses portant le panneau et ayant chacune une partie avant et une partie arrière, la partie arrière des coulisses étant reliée fonctionnellement aux chariots par une paire de biellettes arrière pour être élevée et/ou abaissée dans une direction perpendiculaire à la surface fixe par pivotement des biellettes arrière dans un plan perpendiculaire à la surface fixe lors d'un premier déplacement des chariots.

Pour obtenir le coulissement du panneau au-dessus de la surface du pavillon, les rails de guidage sont fixés sur le dessus du pavillon de sorte que le panneau est en position surélevée par rapport à la surface du pavillon même en position de fermeture du toit. Il est souhaitable d'intégrer le panneau mobile et les rails de guidage dans l'épaisseur du pavillon pour obtenir une surface de pavillon sans discontinuité, ce qui augmente la capacité de pénétration dans l'air du véhicule et diminue la consommation du véhicule.

Aujourd'hui, les véhicules automobiles sont équipés en série d'un pavillon modulaire comprenant deux bandes latérales sur les deux côtés longitudinaux du pavillon, sous forme de rainures aménagées pour recevoir des rails de guidage d'un dispositif d'ouverture et/ou de fermeture de toit. En général, les rainures sont recouvertes de garnitures en matière plastique démontables.

L'invention propose un dispositif d'ouverture et/ou de fermeture de toit pour des véhicules équipés d'un pavillon modulaire ayant une ouverture, dans lequel un panneau mobile entrebâillant et coulissant au-dessus de la surface du pavillon est intégré à la surface du pavillon en position de fermeture du toit.

A cet effet, selon l'invention, la partie avant des coulisses est reliée fonctionnellement aux chariots par une paire de biellettes avant pour être élevée et/ou abaissée dans la direction perpendiculaire à la surface fixe par pivotement des biellettes avant dans le plan perpendiculaire à la surface fixe, le mouvement de pivotement des biellettes avant étant désynchronisé du mouvement de pivotement des biellettes arrière pour élever la partie arrière des coulisses, avant la partie avant des coulisses pendant le premier déplacement des chariots. Les biellettes permettent le passage du panneau au-dessus de la surface du pavillon pour dégager complètement l'ouverture. Le mouvement désynchronisé des biellettes avant par rapport aux mouvement des biellettes arrière permet d'obtenir l'entrebâillement du panneau.

D'autres caractéristiques et avantages de l'invention apparaîtront encore mieux à la lecture de la description qui suit faite en référence aux dessins.

La figure 1 est une vue en perspective éclatée d'une partie du dispositif d'ouverture et/ou de fermeture de toit selon l'invention.

Les Figures 2a,2b,2c sont des représentations schématiques du dispositif d'ouverture et/ou de fermeture de toit, faisant apparaître la cinématique des biellettes dans la position de fermeture, d'entrebâillement et de coulissement du panneau.

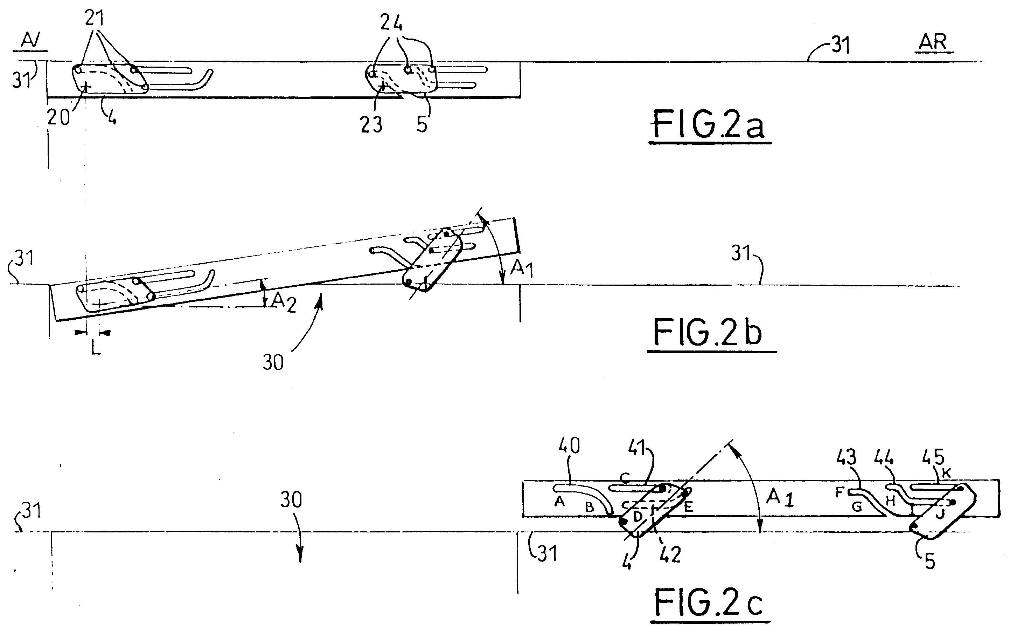

Sur les figures, les mêmes références numériques désignent des éléments identiques. Le dispositif d'ouverture et/ou de fermeture de toit est de préférence monté dans l'épaisseur d'un pavillon 31 d'un véhicule automobile. Une ouverture 30 de forme sensiblement rectangulaire est aménagée dans le pavillon pour recevoir un panneau mobile 1 entrebâillant et coulissant au-dessus de la surface du pavillon comme visible sur les figures 2b et 2c. Le pavillon modulaire est équipé de rainures (non représentées) pour recevoir des rails de guidage 3 longeant les côtés latéraux opposés de l'ouverture et s'étendant vers l'arrière du pavillon. Chaque rail de guidage a une section transversale en forme de U, les deux branches du U étant adaptées pour guider des chariots mobiles en translation longitudinale connus en soi. Un rail est constitué de deux ailes formant les branches du U entre lesquelles coulissent les chariots, les deux ailes étant raccordées entre elles par une paroi profilée ayant un canal de guidage de câble. L'aile supérieure 14 d'un rail possède une largeur plus petite que l'aile qui lui est inférieure pour délimiter dans le pavillon un passage longitudinal au niveau de chaque rail.

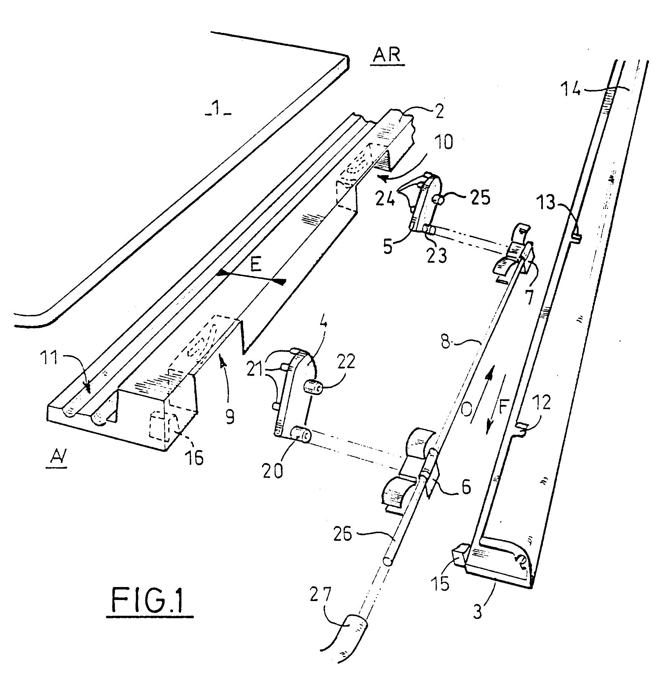

En se reportant à la figure 1, le dispositif d'ouverture et/ou de fermeture de toit est représenté schématiquement en perspective éclatée. Une partie droite du dispositif est représentée seulement. on considèrera que la partie gauche non représentée est identique par symétrie à la partie droite. Outre la paire de rails de guidage 3, le dispositif d'ouverture et/ou de fermeture de toit comprend une paire de chariots avant 6 placés de chaque côté du panneau à l'avant de celui-ci et une paire de chariots arrière 7 placés de chaque côté du panneau et à l'arrière de celui-ci, une paire de coulisses 2 portant le panneau 1, une paire de biellettes avant 4 reliant fonctionnellement la partie avant des coulisses aux chariots avant et une paire de biellettes arrière 5 reliant fonctionnellement la partie arrière des coulisses aux chariots arrière. Un chariot avant 6 est relié à un chariot arrière 7 par un câble 26, le chariot avant 6 et le chariot arrière 7 coulissant ensemble dans le rail 3 longeant le côté latéral droit de l'ouverture. Un même ensemble de chariots et rails est disposé sur le côté latéral gauche de l'ouverture. Un couple de chariots avant et arrière 6,7 peut être remplacé par un chariot unique. Les deux câbles 26 actionnant les couples de chariots 6,7 sont engagés dans un mécanisme de manoeuvre de câble à manivelle ou électrique, connu en soi, par l'intermédiaire de guide-câbles 27 pour commander le déplacement des couples de chariots selon deux directions opposées indiquées par les flèches.

Les coulisses 2 ont une section transversale en forme de L définissant des ailes intérieures 11 sur lesquelles sont posés et fixés, par collage ou analogue, les bords latéraux du panneau 1. Chaque coulisse, de forme allongée dont la dimension longitudinale est sensiblement égale à la dimension d'un côté latéral du panneau, comporte des évidements 9,10 en forme de parallépipède aménagés dans sa partie avant et dans sa partie arrière d'épaisseur E. Des chemins de guidage avant 40,41,42, sous forme de rainures, sont réalisés dans l'évidement 9 et des chemins de guidage arrière 43,44,45, sous forme de rainures, sont réalisés dans l'évidement 10. Les chemins de guidage ont une profondeur adaptée pour recevoir et guider des ergots de commande 21,24 comme décrit plus loin. Selon un mode de réalisation de l'invention, les chemins de guidage avant sont constitués, selon la direction d'avant vers l'arrière de la coulisse, d'un premier chemin de guidage 40, d'un second chemin de guidage 42 en arrière du chemin de guidage 40 et d'un troisième chemin de guidage 41 sensiblement superposé au chemin de guidage 42. Selon la même direction d'avant vers l'arrière de la coulisse, les chemins de guidage arrière sont constitués d'un quatrième chemin de guidage 43, d'un cinquième chemin de guidage 44 en arrière du chemin de guidage 43 et d'un sixième chemin de guidage 45 sensiblement superposé au chemin de guidage 44. Le chemin de guidage 40 comporte un tronçon A parallèle à l'axe longitudinal de la coulisse, suivi d'un tronçon B incliné vers le bas en direction de la surface inférieure de la coulisse et dont l'extrémité est débouchante. Le chemin de guidage 41 comporte un tronçon C parallèle à l'axe longitudinal de la coulisse et au même niveau que le tronçon A. Le chemin de guidage 42 comporte un tronçon D parallèle au tronçon C suivi d'un tronçon E incliné vers le haut en direction de la surface supérieure de la coulisse. Le chemin de guidage 43 comporte un tronçon F parallèle à l'axe longitudinal de la coulisse suivi d'un tronçon G incliné vers le bas et dont l'extrémité est débouchante. Le chemin de guidage 44 comporte un tronçon H parallèle au tronçon F suivi d'un tronçon I incliné vers le bas, lui même suivi d'un tronçon J parallèle au tronçon H. Le chemin de guidage 45 comporte un tronçon K parallèle aux tronçons F ou H.

Chaque biellette avant et arrière 4,5 de forme sensiblement rectangulaire, est montée à rotation sur un chariot avant 6 ou arrière 7 respectivement par l'intermédiaire d'un ergot 20,23 de rotation fixé sur une première face de la biellette et qui s'engage dans un évidement cylindrique (non représenté) aménagé dans l'épaisseur de chaque chariot en vis-à-vis. Des ergots 21,24 de commande sont fixés sur la seconde face de chaque biellette 4,5. Dans l'exemple de réalisation illustré sur les figures, chaque biellette avant 4 ou arrière 5 comporte trois ergots de commande venant chacun se loger dans un chemin de guidage particulier. La disposition des ergots de commande 21,24 sur la seconde face des biellettes 4,5 est adaptée à la disposition des chemins de guidage dans les coulisses de manière que le déplacement des ergots de commande dans les chemins de guidage fait pivoter les biellettes dans un plan perpendiculaire à la surface fixe 31 et selon une cinématique déterminée par le profil des chemins de guidage. En particulier, le profil des chemins de guidage avant 40,41,42 est différent du profil des chemins de guidage arrière 43,44,45 pour désynchroniser le mouvement de pivotement de la biellette avant 4 par rapport au mouvement de pivotement de la biellette arrière 5. Ainsi comme visible sur la figure 2c, le tronçon horizontal A est plus long que les tronçons horizontaux F et H de manière que la biellette arrière 5 pivote d'un angle plus important que la biellette avant 4 pendant un premier déplacement des chariots avant et arrière 6,7.

Chaque biellette avant et arrière 4,5 porte sur sa seconde face un ergot de blocage 22,25 qui fait sailli en direction du rail et qui se prolonge entre les deux ailes de celui-ci. L'aile supérieure 14 de chaque rail comporte des évidements 12,13 aménagés pour laisser passer les ergots de blocage 22,25 lorsque le panneau 1 est coulissé au-dessus de la surface fixe 31 du pavillon. Dans cette position du panneau 1, les ergots de blocage 22,25 se positionnent et se déplacent sur la surface supérieure 14 des rails 3.

Nous allons maintenant décrire le fonctionnement du dispositif d'ouverture et/ou de fermeture de toit en se reportant aux figures 2a à 2c.

En position de fermeture du toit, le panneau 1 est encastré dans l'ouverture 30. Les biellettes avant et arrière 4,5 sont dans une position "baissée" et les ergots de commande 21,24 sont positionnés à une extrémité des tronçons A,C,D,F,H,K. Les biellettes 4,5 sont complètement logées dans les évidements 9,10.

Selon la première direction de manoeuvre des câbles 26, correspondant à la flèche O, les chariots avant et arrière 6, 7 sont simultanément déplacés vers l'arrière dans les rails 3 sur une distance L correspondant au premier déplacement visible sur la figure 2b. Pendant ce premier déplacement, les ergots de commande 21 se déplacent dans les tronçons horizontaux A,D,C pendant que les ergots de commande 24 se déplacent dans les tronçons horizontaux F,H,K avant de s'engager dans les tronçons inclinés G,I. Les tronçons horizontaux F,H,K correspondent à une course morte des câbles pour tenir compte de l'inertie du système d'entraînement de câbles, par exemple un moteur électrique. Pendant les déplacement des ergots de commande 2,24 dans les tronçons horizontaux A,D,C,F,H,K, les biellettes ne sont pas actinnées et le panneau 1 reste en position de fermeture. L'engagement des ergots de commande 24 dans les tronçons inclinés G,I provoque le pivotement des biellettes arrière 5 autour de l'axe de rotation 23 et donc l'élévation de la partie arrière des coulisses. L'axe longitudinal d'une biellette arrière forme alors un angle A1 avec la surface du pavillon. Par ailleurs, les biellettes avant 4 pivotent autour de l'axe 20 sous l'action de l'élévation de la partie arrière des coulisses, les ergots de commande 21 se déplaçant toujours dans les tronçons horizontaux A,C,D. Toutefois, la partie avant des biellettes reste "abaissée" ; l'axe longitudinal d'une biellette avant formant un angle A2 avec la surface du pavillon, inférieur à l'angle A1, et correspondant à l'angle d'entrebâillement du panneau au-dessus de la surface fixe du pavillon. La course du panneau 1 le long des rails de guidage est verrouillée par un système de blocage constitué par exemple d'une découpe 16 dans la surface inférieure de chaque coulisse, en prise avec un plot de verrouillage 15 fixé à l'extrémité avant des rails.

En poursuivant, la manoeuvre des câbles 26 selon la même direction, les ergots 21 des biellettes avant 4 s'engagent alors dans les tronçons inclinés B et E tandis que les ergots 24 des biellettes arrière 5 s'engagent dans les tronçons horizontaux J et K comme visible sur la figure 2c. La biellette avant 4 continue son pivotement autour de l'axe 20, son axe longitudinal formant alors un angle A1 avec la surface du pavillon, et la biellette arrière 5 conserve sa position "élevée", ce qui provoque l'élévation de la partie avant des coulisses et donc l'élévation complète du panneau verticalament au-dessus de l'ouverture. En continuant la manoeuvre des câbles selon la même direction de manoeuvre, les ergots 21 et 24 arrivent en butée dans les tronçons C, E, J, K, ce qui provoque le coulissement du panneau au-dessus de la surface fixe du pavillon. L'élévation verticale du panneau 1 désolidarise la découpe 16 du plot 15 et positionne les ergots de blocage 22,25 sur le dessus des surfaces supérieures 14 des rails. En position de coulissement du panneau, les biellettes 4,5 ont une extrémité en vis-à-vis de l'intérieur des rails et une autre extrémité au-dessus des rails, leur partie centrale passant à travers les passages de rail définis par les ailes supérieures 14 des rails.

Dans la position de dégagement complet de l'ouverture, le panneau 1 peut être amené, par une manoeuvre opposée des câbles 26 selon la direction représentée par la flèche F, dans la position élevée au-dessus de l'ouverture, puis entrebâillé et enfin dans une position de fermeture du toit.

## Revendications

1. Un dispositif d'ouverture et/ou de fermeture de toit, notamment pour véhicule automobile, pour dégager une ouverture (30) formée dans une surface fixe (31) du toit par entrebâillement et/ou coulissement d'un panneau (1) au-dessus de la surface fixe, comprenant une paire de rails (3) de guidage longeant deux côtés latéraux opposés de l'ouverture, au moins une paire de chariots (7) placés de chaque côté latéral du panneau, les chariots étant mobiles en translation longitudinale dans les rails de guidage et actionnés en translation par une paire de câbles (26), une paire de coulisses (2) portant le panneau (1) et ayant chacune une partie avant et une partie arrière, la partie arrière des coulisses étant reliée fonctionnellement aux chariots par une paire de biellettes arrière (5) pour être élevée et/ou abaissée dans une direction perpendiculaire à la surface fixe par pivotement des biellettes arrière dans un plan perpendiculaire à la surface fixe lors d'un premier déplacement des chariots, **caractérisé** en ce la partie avant des coulisses est reliée fonctionnellement aux chariots par une paire de biellettes avant (4) pour être élevée et/ou abaissée dans la direction perpendiculaire à la surface fixe par pivotement des biellettes avant dans le plan perpendiculaire à la surface fixe, le mouvement de pivotement des biellettes avant étant désynchronisé du mouvement de pivotement des biellettes arrière pour élever la partie arrière des coulisses avant la partie avant des coulisses pendant le premier déplacement des chariots.

2. Le dispositif selon la revendication 1, comprenant une seconde paire de chariots (6) placés de chaque côté latéral du panneau et qui sont en relation fonctionnelle avec la partie avant des coulisses (2) par l'intermédiaire de la paire de biellettes avant (4).

3. Le dispositif selon la revendication 1 ou 2, dans lequel chaque biellette (4,5) est relié à un chariot (6,7) par un axe de rotation et chaque biellette (4,5) est reliée à une coulisse (2) par le jeu d'ergots de commande (21,24) portés par les biellettes et de chemins de guidage (40-45) aménagés dans l'épaisseur des parties avant et arrière de la coulisse.

4. Le dispositif selon la revendication 3, dans lequel les chemins de guidage (40-42) dans la partie avant d'une coulisse ont un profil différent des chemins de guidage (43-45) dans la partie arrière de la coulisse pour désynchroniser le mouvement de pivotement d'une biellette avant par rapport au mouvement de pivotement d'une biellette arrière pendant le premier déplacement des chariots (6,7).

5. Le dispositif selon la revendication 1 dans lequel les biellettes sont agencées pour lever au moins l'arrière du panneau (1) au-dessus de la surface fixe.

6. Le dispositif selon la revendication 5, dans lequel les biellettes sont agencées de manière à lever l'ensemble du panneau au-dessus de la surface fixe.

7. Le dispositif selon la revendication 6 dans lequel les biellettes sont agencées de manière à permettre au panneau de coulisser intégralement au-dessus de la surface fixe.

## Claims

1. Device for opening and/or closing a roof, particularly for a motor vehicle, in order to release an opening (30) formed in a fixed surface (31) of the roof by half-opening and/or sliding a panel (1) above the fixed surface , comprising a pair of guide rails (3) extending along two opposite lateral sides of the opening, at least one pair of carriages (7) located on either lateral side of the panel, the carriages being displaceable longitudinally in the guide rails and being actuated to move by a pair of cables (26), a pair of slides (2) carrying the panel (1) and each having a forward portion and a rear portion, the rear portion of the slides being functionally connected to the carriages by a pair of rear connecting rods (5) in order to be raised and/or lowered in a direction perpendicular to the fixed surface by pivoting the rear connecting rods in a plane perpendicular to the fixed surface during a first displacement of the carriages, **characterised in that** the forward portion of the slides is functionally connected to the carriages by a pair of forward connecting rods (4) in order to be raised and/or lowered in the direction perpendicular to the fixed surface by pivoting the forward connecting rods in the plane perpendicular to the fixed surface, the pivoting movement of the connecting rods being desynchronised from the pivoting movement of the rear connecting rods in order to raise the rear portion of the slides before the forward portion of the slides during the first displacement of the carriages.

2. Device according to claim 1, comprising a second pair of carriages (6) placed on either lateral side of the panel, and which are in a functional relationship with the forward portion of the slides (2) through the intermediary of the pair of forward connecting rods (4).

3. Device according to claim or 2, wherein each connecting rod (4, 5) is connected to a carriage (6, 7) by an axis of rotation, and each connecting rod (4, 5) is connected to a slide (2) by the set of control pins (21, 24) carried by the connecting rods and guide tracks (40-45) provided in the thickness of the forward and rear portions of the slide.

4. Device according to claim 3, wherein the guide tracks (40-42) in the forward portion of a slide have a profile different from the guide tracks (43-45) in the rear portion of the slide, in order to desynchronise the pivoting movement of a forward connecting rod with respect to the pivoting movement of a rear connecting rod during the first displacement of the carriages (6, 7).

5. Device according to claim 1, wherein the connecting rods are so disposed as to raise at least the rear of the panel (1) above the fixed surface.

6. Device according to claim 5, wherein the connecting rods are so disposed as to raise the entire panel above the fixed surface.

7. Device according to claim 6, wherein the connecting rods are so disposed as to enable the panel to slide integrally above the fixed surface.

## Patentansprüche

1. Öffnung- und/oder Schließvorrichtung für Dächer, insbesondere für Kraftfahrzeuge, um eine in einer festen Fläche (31) des Dachs gebildete Öffnung (30) durch Anheben und/oder Schieben einer Platte (1) über die feste Fläche freizugeben, wobei die Vorrichtung ein Paar Führungsschienen (3) aufweist, die zwei entgegengesetzte Seitenkanten der Öffnung säumen, Wenigstens ein Paar Schlitten (7), die auf jeder Seitenkante des Dachs angeordnet sind, die in Längstranslation in den Führungsschienen beweglich sind und die in Translation von einem Paar Kabel (26) angetrieben werden, ein Paar Gleitführungen (2), die die Platte (1) tragen und die jeweils ein vorderes Teil und ein hinteres Teil haben, wobei der hintere Teil der Gleitführungen funktional mit den Schlitten durch ein Paar hintere Schwingarme (5) verbunden ist, um in einer zu der festen Fläche senkrechten Richtung durch Schwenken der hinteren Schwingarme in einer zu der festen Fläche senkrechten Ebene während einer ersten Verschiebung der Schlitten angehoben und/oder abgesenkt zu werden, dadurch gekennzeichnet, daß der vordere Teil der Gleitführungen funktional mit den Schlitten durch ein Paar vordere Schwingarme (4) verbunden ist, um in einer zu der festen Fläche senkrechten Richtung durch Schwenken der vorderen Schwingarme in einer zu der festen Fläche senkrechten Ebene angehoben und/oder abgesenkt zu werden, wobei die Schwenkbewegung der vorderen Schwingarme mit der Schwenkbewegung der hinteren Schwingarme desynchronisiert wurde, um den hinteren Teil der Gleitführungen vor dem vorderen Teil der Gleitführungen während der ersten Verschiebung der Schlitten anzuheben.

2. Vorrichtung gemäß Anspruch 1, die ein zweites Paar Schlitten (6) aufweist, die auf jeder Seitenkante der Platte angeordnet und die mittels einem Paar vorderer Schwingarme (4) in funktionaler Verbindung mit dem Vorderteil der Gleitführungen (2) sind.

3. Vorrichtung gemäß Anspruch 1 oder 2, bei der jeder Schwingarm (4,5) mit einem Schlitten (6,7) über eine Drehachse verbunden ist und jeder Schwingarm (4,5) mit einer Gleitführung (2) über den Satz Steuerstifte (21,24) verbunden ist, die von den Schwingarmen und den in der Dicke des vorderen und hinteren Teils der Gleitführung angebrachten Führungswegen (40-45) getragen sind.

4. Vorrichtung gemäß Anspruch 3, bei der die Führungswege (40-42) in dem Vorderteil einer Gleitführung ein von den Führungswegen (43-45) in dem hinteren Teil der Gleitführung unterschiedliches Profil haben, um die Schwenkbewegung eines vorderen Schwingarms bezüglich der Schwenkbewegung eines hinteren Schwingarms während der ersten Verschiebung der Schlitten (6,7) zu desynchronisieren.

5. Vorrichtung gemäß Anspruch 1, bei der die schwingarme angebracht sind, um wenigstens den hinteren Teil der Platte (1) über die feste Fläche zu heben.

6. Vorrichtung gemäß Anspruch 5, bei der die schwingarme so angebracht sind, daß sie die Gesamtheit der Platte über die feste Fläche anheben.

7. Vorrichtung gemäß Anspruch 6, bei der die Schwingarme so angebracht sind, daß sie der Platte erlauben, uneingeschränkt über die feste Fläche zu gleiten.
